# EUROPEAN PATENT SPECIFICATION

(11) **EP 1 670 224 B1**
(45) Date of publication and mention of the grant of the patent: **12.10.2011**
(21) Application number: 04028973.8
(22) Date of filing: 07.12.2004
(51) Int. Cl.: H04M 1/03, H04M 1/60

(54) **A portable electronic device comprising extendable sound guiding means**
Tragbares elektronisches Gerät mit erweiterbarem Schallkanal
Dispositif électronique portatif comprenant un guide acoustique extensible

(43) Date of publication of application: 14.06.2006
(73) Proprietor: Hewlett-Packard Development Company, L.P., Houston, TX 77707 (US)
(72) Inventor: Hoeyer, Michael, 9200 Aalborg SV (DK)
(74) Representative: W.P. Thompson & Co.

(56) References cited:
- EP-A- 1 091 539
- WO-A-98/20659
- WO-A-03/051022
- GB-A- 2 361 138
- US-A- 6 104 808
- US-A1- 2004 192 417

## Description

The invention relates to portable electronic devices comprising an acoustic transducer adapted to convert an audio signal to an acoustic signal and a housing further comprising a first part and a second part.

### Background art

Many of the modern telephones may be used in a "hands-free mode" or in a "normal mode". In contrast to the "normal mode", in the "hands-free mode" the amplifier of the telephone uses a much higher gain to amplify the signal that is being output through a speaker. The "hands-free mode" can usually be activated e.g. by using the keypad of the telephone, and in many cases the telephone requires a confirmation from the user. This rather complex way of controlling the switching between the "normal mode" and the "hands-free mode" is partially due to the fact that a higher output volume could damage the hearing of the user. The risk of a hearing damage cannot be neglected if the user is using his or her telephone as in "normal mode" (i.e. pressing it against the ear) and the loudspeaker would be operated as in the "hands-free mode".

Recently, some alleged reliability problems in controlling the switching between the two modes have been investigated in some telephone models. A hypothesis not yet confirmed has been that the software-driven confirmation mechanism could in some cases fail, causing the activation of the "hands-free mode" even though the user is pressing the telephone against his or her ear. Besides a hearing damage to the user as a consequence, such a situation occurring would without any doubt bring unpleasant consequences to the manufacturer of such a telephone in the form of liability claims and negative publicity.

Consequently, a problem to be solved is to reduce the risk of an accidental hearing damage to a user of a portable electronic device.

GB2361138A relates to an earpiece for transmitting sound in a first direction, a transducer for converting electrical signals into speech, sound and a dielectric member having an acoustic duct that extends in a direction that is normal to the first direction.

EP 1 091 539 A2 discloses a portable device including a transducer having two opposing openings, the device being operable in a "normal" and a "hands-free mode".

### Summary of the invention

The risk of an accidental hearing damage resulting from using a portable electronic device can be reduced with a portable electronic device as set out in claim 1.

The dependent claims describe various advantageous embodiments of the invention.

### Advantages of the invention

If a portable electronic device, in addition to comprising an acoustic transducer adapted to convert an audio signal to an acoustic signal and a housing comprising a first and a second part, further comprises means adapted to extend a sound channel or a part thereof from the acoustic transducer to the exterior of the portable electronic device when the relative position of the first part to the second part is changed from a first position to a second position, accidental hearing damage may be avoided since the sound channel becomes extended and therefore sound pressure to the ear is reduced, or would not cause at least that high damage even though a software or hardware control of the amplifier circuit would fail.

Furthermore, changing the relative position from the first position to the second position or vice versa requires a physical action, such as a hand movement, from the user, thus further reducing the probability of accidentally changing the relative position. The length of sound channel cannot thus be shortened in a manner surprising the user of the portable electronic device.

When at least a part of the means adapted to extend a sound channel or a part thereof from the acoustic transducer to the exterior of the portable electronic device is integrated into the housing, the construction of the portable electronic device can be made more compact.

The compactness of the construction can be improved as an alternative or in addition to that of above also by integrating the means adapted to extend a sound channel or a part thereof from the acoustic transducer to the exterior of the portable electronic device into the first part or the second part. This reduces the complexity of the design since the relative position of the first part and the second plays an integral role in extending the sound channel.

If the means adapted to extend a sound channel or a part thereof from the acoustic transducer to the exterior of the portable electronic device is at least partly comprised in the means for joining the first part to the second part, the space between the first and the second part can be used more effectively. Above all, this further reduces the risk of malfunction, and of unintentionally changing the length of the sound channel.

If the means adapted to extend a sound channel or a part thereof from the acoustic transducer to the exterior of the portable electronic device comprises a passage that is either hollow or at least partly filled with material having better acoustic coupling properties than the material surrounding the passage, the passage can be conveniently integrated into the portable electronic device.

If the means to extend a sound channel or a part thereof from the acoustic transducer to the exterior of the portable electronic device is adapted to extend the sound channel away from the acoustic transducer, the probability that there is less acoustic energy available in the second position as there would be in the first position can be increased, since the ear of the user, when the portable electronic device is in the use position, would be further away from the acoustic transducer.

If the portable electronic device further comprises means for amplifying an audio signal and means for adjusting gain with which said audio signal is amplified, the means for adjusting gain being responsive to the relative position of the first part to the second part, the changing between the "normal mode" and the "hands-free mode" can be made responsive to the relative position of the first part and the second part of the housing. By so doing, the cumbersome step of requiring confirmation from the user can be omitted.

If the means for adjusting gain is in the second position is adapted to inhibit increasing gain as much as in the first position, or to limit gain, it can be made sure that in the second position (i.e. in the "normal mode") the output volume will be reasonably low since now in the "normal mode" the output volume cannot be that high as in the "hands-free mode". This reduces further the risk of hearing damage.

If the means for adjusting gain is adapted to increase gain in the first position more than in the second position, it can be ensured that the sound volume is in the second position lower than in the first position. This reduces further the risk of hearing damage.

If the first part is a body part and the second part is a clam-shell, a slider, or a cap part, the operation required by the user to extend the sound channel can be made more straightforward. This in turn would enhance the comfort and easiness of use since the user may not need to study how to use the feature of extending the sound channel in the portable electronic device from the user manual.

If the portable electronic device comprises means for repetitively changing between the first position and the second position when the first part and the second part are slid or pressed toward each other, a new feature which may find acceptance among some users can be obtained. Switching the portable electronic device between the first position and the second position could then resemble switching a ballpoint pen between the write position and the storage position.

### List of Drawings

In the following, the invention is described in more detail by way of examples shown in the appended drawings in Figures 1 to 6, of which:
Figure 1 shows a first telephone in a second position;
Figure 2 shows a second telephone in a second position;
Figure 3A illustrates a side view of the telephone of Figure 1 in a second position;
Figure 3B illustrates a side view of the telephone of Figure 1 in a first position;
Figure 4 is a front view of a telephone similar to those in Figures 1 to 3B, and an illustration of a section of the same;
Figure 5 shows a third telephone; and
Figure 6 shows a fourth telephone.

Same reference numerals refer to similar structural elements throughout the Figures.

### Detailed description

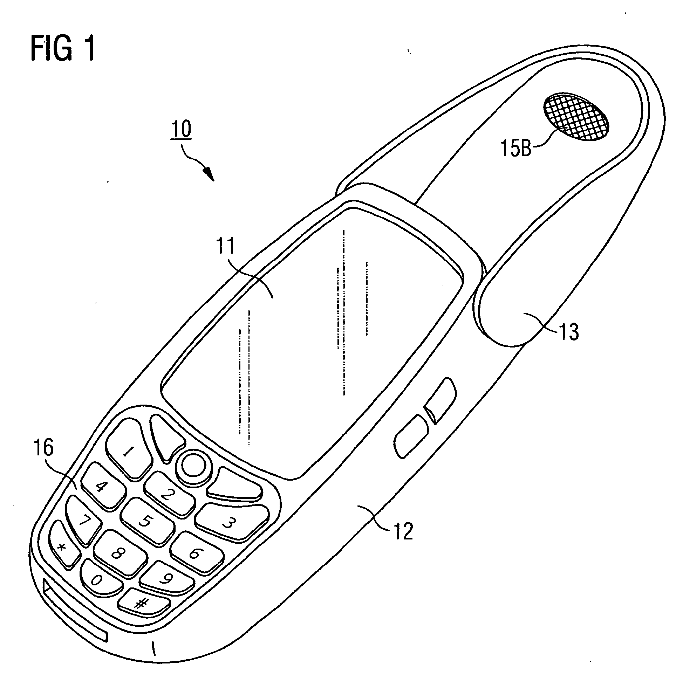

Figure 1 shows a telephone 10 in a second position. The telephone 10 comprises a display 11 and input means, especially one or more keys in a keypad 16, for entering characters or digits to the telephone 10. Then the telephone 10 comprises a speaker opening 15B. The housing of the telephone 10 comprises a first part 12 and a second part 13. The telephone 10 of Figure 1 is a clam-shell telephone which can be closed by turning the second part 13 over the display 11.

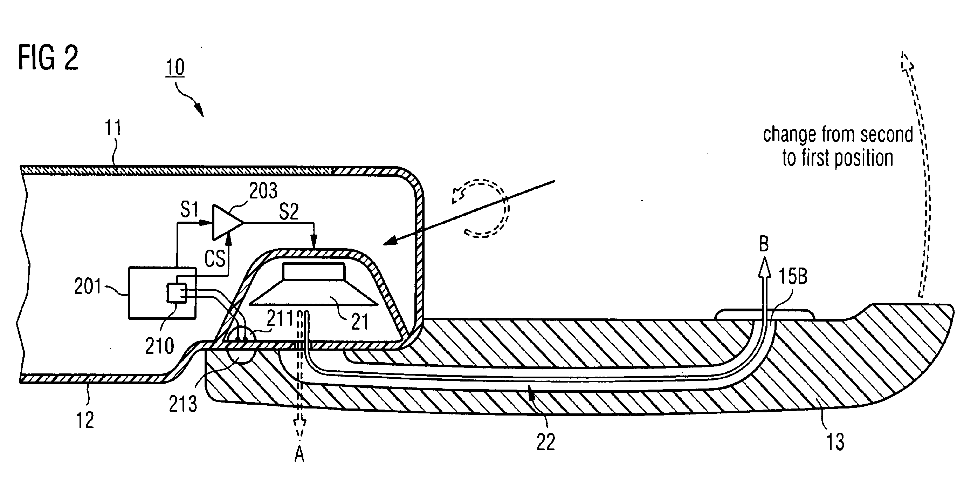

Figure 2 shows a section of another telephone 10 in a second position. The telephone 10 comprises an amplifier 203 for amplifying an audio signal S1 to an amplified signal S2. The amplified signal S2 is passed to a loudspeaker 21 which converts it to an acoustic signal. The acoustic signal is passed to a passage 22 in the second part 13 that leads to speaker opening 15B. The sound channel therefore extends from the speaker 21 to point B at the exterior of the telephone 10.

The passage 22 may either be hollow or at least partly filled with material having better acoustic coupling properties than the material surrounding the passage, such as foam. For example, when the second part 13 of the housing is made of hard plastic, the passage 22 couples better to the acoustic waves and carries them through to the speaker opening 15B.

The telephone 10 comprises means 201 for providing audio signal S1 to the amplifier 203. The means 201 may comprise a processing unit such as a microprocessor. The means 201 may further comprise means 210, such as a piece of software executed in the microprocessor that can be used to control the gain of the amplifier 203.

Information whether the housing is in the first position or in the second position may at easiest be collected by using position detecting means 211, such as two conductive contact means (such as two metallic contacts) in the first part 12, and position indication means 213 (such as short-circuiting means, e.g. a metallic plate) in the second part. The position indication means 213 is adapted to indicate its proximity to the position detecting means 211. One purpose of the position detecting means 211 and position indication means 213 is to find out the relative position between the first part 12 and the second part 13. The position detecting means 211 and position indication means 213 can be adapted to produce an analogic value that is a logical value (first position or second position) or that can be digitized to find out more the relative position with a higher accuracy.

For example, if short-circuiting means are used to short-circuit two conductive contact means, they are preferably adapted to short-circuit them only in the second (or only in the first) position.

The position determination means 211 is then connected to a bus that is further connected to means 201 which is adapted to pass the information to means 210.

The means 210 may receive information on the relative position of the first part 12 to the second part 13, i.e. whether the housing is in the first position or in the second position. When the housing is in the second position, the means 210 may be adapted to provide a control signal CS to the amplifier 203 for limiting the gain or for inhibiting the increasing of the gain.

As an alternative or in addition, the means 210 can be adapted to provide the control signal CS to the amplifier 203 for enabling the increasing of the gain when the housing is in the first position or not for limiting the gain.
It is emphasized that position detecting means 211 and position indication means 213 are optional. If their fail in their function, thanks to the construction extending the sound channel, in the second position the negative consequences to the hearing of the user may not be that severe as they would be, since the sound pressure will at speaker opening 15B be less than at speaker opening 15A due to the longer sound path.

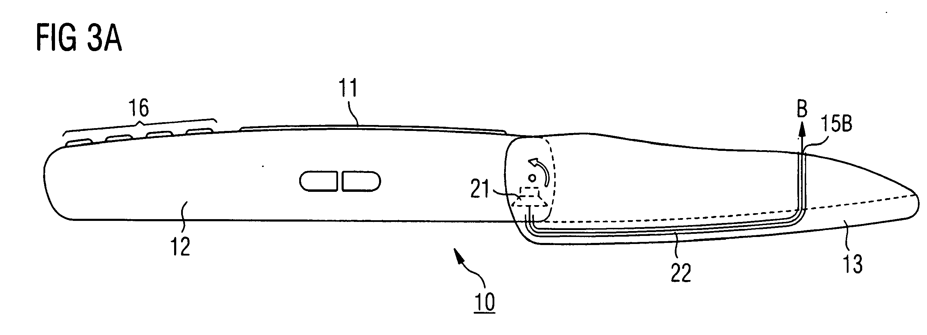

Figure 3A illustrates a side view of the telephone 10 of Figure 1 in the second position. The loudspeaker 21 and the passage 22 have been added to the side view only in order to illustrate the principle of the invention.

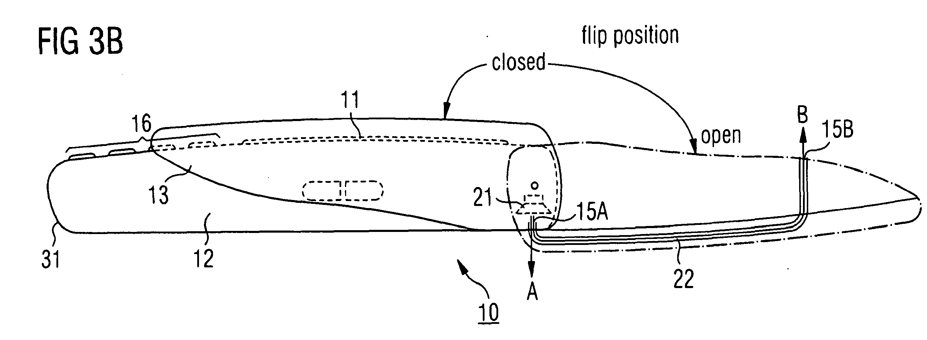

Figure 3B illustrates a side view of the telephone of Figure 3A in a first position, likewise in Figure 3A with a sketch of the loudspeaker 21. The position of the second part 13 in the second position has been marked with a dashed line.

In the first position, also in a "closed" position if the second position is an "open" position, the second part 13 has been turned on top of the display 11 to cover it, and also partly to cover the keypad 16.

Sound channel from the loudspeaker 21 extends now in the first position - instead of to the speaker opening 15B - to the speaker opening 15A that is closer to the loudspeaker 21. Sound comes out from the housing to the exterior of the telephone 10 at point A.

In the first position, the telephone 10 can be operated in the "hands-free mode", meaning that the amplification gain for the ringer volume and e.g. speech is ramped up. The amplifier 203 amplifies the audio signal S1 with a high gain, and because the amplitude of the amplified signal S2 is higher, the loudspeaker 21 produces a high volume.

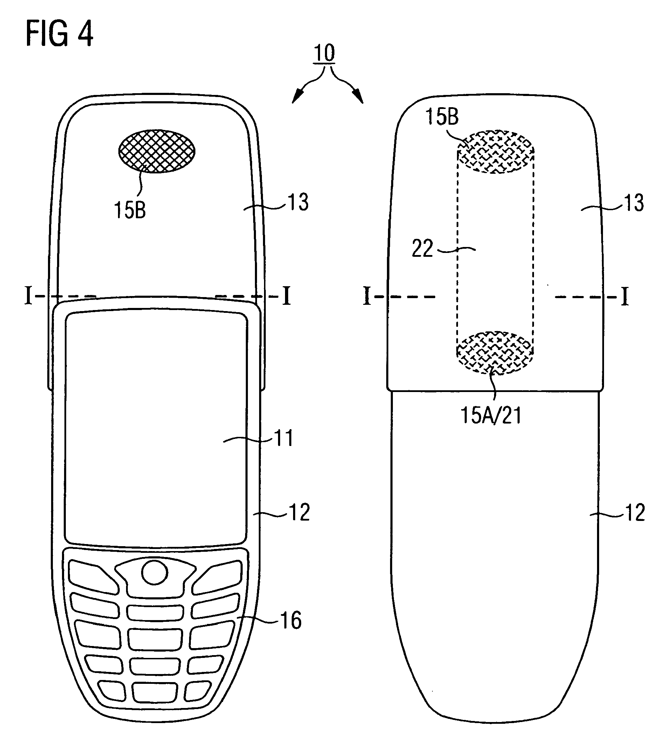

Figure 4 shows on left a front view of a telephone 10 similar to those shown in Figures 1 to 3B, and on right the same telephone 10 where the speaker opening 15B is illustrated together with the speaker 21 or with the speaker opening 15A.

From the line marked with I-I which denotes the same position between the illustrations on the left and on the right it can seen that the speaker 21 or the speaker opening 15A is underneath or below the display 11.

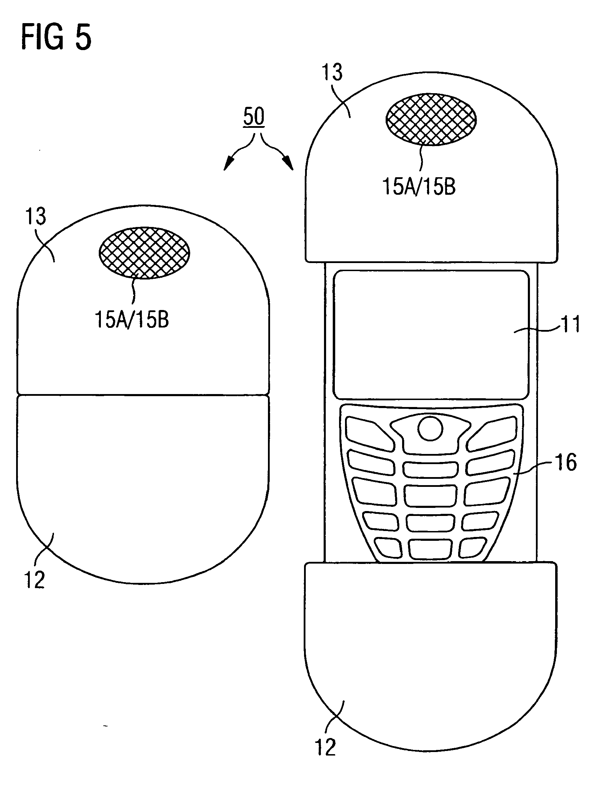

Figure 5 shows a telephone 50. The telephone 50 is in many regards quite similar to telephones 10 above. The first part 12 of the housing and the second part 13 of the housing are now both movable.

In closed position (on left) the display 11 and the keypad 16 are both covered. In open position (on right) the first part 12 and the second part 13 are slid apart. The switching from open position to closed position can then be performed by sliding the first part 12 toward the second part. As an alternative, a "snap-lock" mechanism typically used in ballpoint pens can be used.

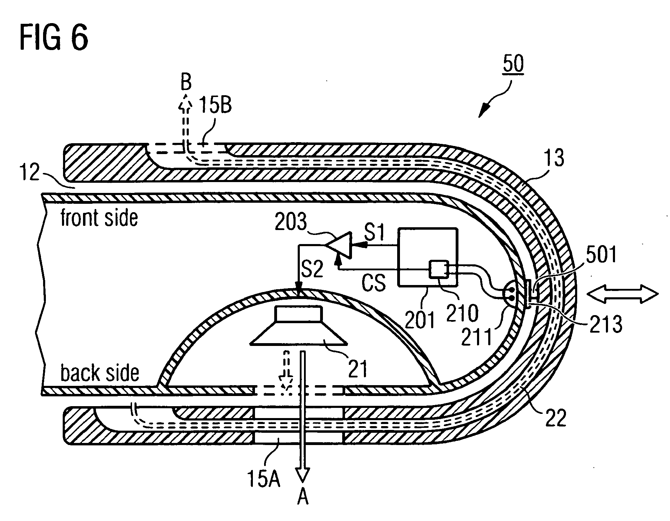

The telephone 50 comprises now only one speaker opening 15A/15B. By changing the telephone 50 from the first (closed) position to the second (open) position, means in the housing of the telephone extend the sound channel. This principle is illustrated in more detail in Figure 6.

Figure 6 shows a telephone 50 rather similar to the telephone 50 of Figure 5, except that now the telephone 50 comprises two speaker openings 15A and 15B, respectively.

The sound channel is again in a form of a passage 22 that is integrated in the second part 13 of the housing. In the closed position, the sound channel extends from the loudspeaker 21 to exterior of the telephone 50 at the speaker opening 15A at point A. In the open position, the first end of the passage 22 would be in front of the loudspeaker 21, and its second end would then be at the speaker opening 15B so that the sound channel would extend from the loudspeaker 21 to exterior of the telephone at point B.

The telephone 50 of Figure 6 can be adapted to work with one speaker opening 15A/B as that in Figure 5 by designing two passages in the second part 13, for example. One of the passages is shorter and is for the first (closed) position, whereas the other is longer and is for the second (open) position.

The optional mechanism for automatically detecting whether the housing is in the first (closed) position or in the second (open) position can be performed by adding a similar arrangement as discussed with reference to Figure 2, i.e. position determination means 211 and position indication means 213. A contact spring 501 may be installed below the position indication means 213 to improve contact to position determination means 211.

In a manner similar to the embodiment shown in Figure 2, the position determination means 211 are preferably in the same part of the housing where means 201 for providing signal to the amplifier 203 are located, e.g. in the first part 12. The position indication means 213 are then preferably in the other part, now in the second part 13. The position determination means 211 may comprise a switch that is activated by pressure caused through the second part 13. Then the position indication means 213 would correspond to that part of the second part 13 that exerts pressure on to the position determination means 211.

Instead of using a loudspeaker 21, any kind of acoustic transducer adapted to convert an audio signal to an acoustic signal (sound) can be used. Instead of using one loudspeaker 21, a set of more than one loudspeakers or acoustic transducers can be used.

The embodiments of the invention shown in Figures 1 to 4 are not limited to clam-shell -like telephones but can be used also with telephones wherein the second part of the housing has a function of a slider. The embodiments of Figures 5 and 6 can be used with slider telephones too, and with some engineering work with clam-shell -like telephones as in Figures 1 to 4 too.

The passage 22 may be constructed at least partly to be comprised within a hinge for joining the first part 12 to the second part 13. Such a hinge can be constructed with sound channels distributing the sound according to the physical state of the hinge, i.e. depending whether the hinge is open or closed.

When the hinge is closed, the manner in which different tones for incoming calls, messages, and alarms appear may be differently from that of the state of the art telephones. The length of the passage 22 from the loudspeaker 21 to the exterior of the telephone 10, 50 changes thereby changing the acoustic impression.

It is also possible to use the telephone 10, 50 in a "hands-free" mode without opening the hinge. But once the hinge is opened, the sound will be limited to a volume not hurting the human ear. Since sound channel from the loudspeaker 21 to the speaker opening 15A is made on the backside of the telephone 10, 50, the sound will be led through pipes in the hinge (or in the second part 13) to another speaker opening 15B. The other speaker opening 15B has been positioned to radiate the sound in the direction of the user's ear.

The second part 13 can be made of a soft lightweight material in order not to reduce ear irritation. Since heat producing components comprised in the telephone 10, 50, such as a possible radio frequency circuit, are not directly located close to the ear, the problem of "heated ears" can be reduced or overcome. The choice of material for the second part 13 or for the hinge can also enhance the protection against an acoustic shock.

The second part 13 helps also the user to keep a possible microwave transmitter of the telephone 10, 50 further from the brain. Since studies of negative health impacts of microwave radiation possibly caused by some telephones are ongoing, this option should be kept open. By using the invention, absorption of radiation in the brain tissue may be reduced in such telephones.

For small telephones, the second part 12 extends the length of the telephone. Thus the distance between the microphone and mouth gets shorter, and the sensibility of the microphone system can be improved. The feeling of having the microphone closer to the mouth improves comfort of use.

The passage 22, e.g. sound pipes, can be constructed to give special characteristics of the sound. In particular, bass can be enhanced or sharp "s", i.e. hissing, can be reduced.

There is no upper size for the limit of the size of the second part 13. Preferably it is made to almost or wholly cover one side of the first part 12. As an alternative, only a smaller area at the top of the telephone 10, 50 can be covered. The unconventional way of placing the speaker opening 15A on the rear part of the telephone saves a lot of space for a display 11. The display 11 can therefore be a full-front display, or covering a substantial portion of the front side (e.g. what will be left from the keypad 16).

The invention is not limited to a telephone but can be used in any portable electronic device, especially to any portable electronic device that comprises means for telephony. Such devices are devices that most apparently have the need to be used close to the ear of a user, and that would benefit of the "hands-free mode".

Particular examples of telephones comprise cellular (e.g. GSM, EDGE, GPRS, UMTS, CDMA) telephones, sometimes referred to as mobile telephones. Even though wireless telephones (e.g. DECT) can be used, the telephone does not need to be that complicated but an ordinary PSTN or ISDN telephone can be modified according to the invention. It is also possible to implement the invention in a more modern telephones, such as in a SIP telephone.

## Claims

1. A portable electronic device (10; 50), comprising: an acoustic transducer (21) adapted to convert an audio signal (S2) to an acoustic signal and a housing further comprising a first part (12) and a second part (13), the portable electronic device (10;50) further comprises means (22) adapted to extend a sound path or a part thereof from the acoustic transducer (21) to the exterior of the portable electronic device (10;50) **characterized in that**: in a first position the sound path extends to a speaker opening (15A) closer to the acoustic transducer (21) than a second opening (15B) while in a second position in which the sound path is extended as the relative position of the first part (12) and the second part (13) is changed.

2. A portable electronic device (10; 50) according to claim 1, **wherein**: at least a part of the means (22) is integrated into the housing.

3. A portable electronic device (10; 50) according to claim 1 or 2, **wherein**: at least a part of the means (22) is integrated into the first part (12) or the second part (13).

4. A portable electronic device (10; 50) according to claim 1, 2 or 3, **wherein**: the means (22) is at least partly comprised in means for joining the first part (12) to the second part (13), especially in a hinge between the first part (12) and the second part (13) or in bearing thereof.

5. A portable electronic device (10: 50) according to any one of the preceding claims, **characterized in that**: the means (22) comprises a passage that is either hollow or at least partly filled with material having better acoustic coupling properties than the material surrounding the passage.

6. A portable electronic device (10; 50) according to any one of the preceding claims, **characterized in that**: the means (22) is adapted to extend the sound channel away from the acoustic transducer.

7. A portable electronic device (10; 50) according to any one of the preceding claims, **characterized in that**: the means (22) is adapted to extend the sound channel to another face of the portable electronic device in the second position than in the first position.

8. A portable electronic device (10; 50) according to any one of the preceding claims, further **comprising**: means (203) for amplifying an audio signal (S1), and means (201) for adjusting gain with which said audio signal (S1) is amplified, the means (201) for adjusting gain being responsive to the relative position of the first part (13) to the second part (12).

9. A portable electronic device (10; 50) according to claim 8, **wherein**: the means (201) for adjusting gain in the second position in inhibited from increasing as much as in the first position.

10. A portable electronic device (10; 50) according to claim 8, **wherein**: the means (201) for adjusting gain are adapted to increase gain in the first position more than in the second position.

11. A portable electronic device (10; 50) according to any of the preceding claims **wherein**: the first part (12) and the second part (13) are in the first position adapted to at least partly cover a display (11) or a keypad (16), and in the second position to cover them to a smaller extent or not to cover them.

12. A portable electronic device (10; 50) according to any one of the preceding claims, **wherein**: the first part (12) is a body part ad the second part (13) is a clam-shell

13. A portable electronic device (10; 50) according to any of the preceding claims, **wherein**: the first part (12) is a body part and the second part (13) is a slider.

14. A portable electronic device (10; 50) according to any of the preceding claims, **wherein**: the first part (12) is a body part and the second part (13) is a cap part.

15. A portable electronic device (50) according to any one of the preceding claims, **wherein**: the portable electronic device (50) furthermore comprises means for repetitively changing between the first position and the second position when the first part (12) and the second part (13) slide with respect to each other or are pressed upon one another.

16. A portable electronic device (10; 50) according to any one of the preceding claims, **wherein**: the portable electronic device (10; 50) is a telephone, or has means (201) for telephony.

17. A portable electronic device (10; 50) according to any one of the preceding claims, **wherein**: the acoustic transducer (21) is a loudspeaker.

## Patentansprüche

1. Tragbares elektronisches Gerät (10; 50), das Folgendes umfasst: einen akustischen Wandler (21) zum Umwandeln eines Audiosignals (S2) in ein akustisches Signal und ein Gehäuse, das ferner einen ersten Teil (12) und einen zweiten Teil (13) umfasst, wobei das tragbare elektronische Gerät (10; 50) ferner Mittel (22) zum Verlängern eines Schallwegs oder eines Teils davon vom akustischen Wandler (21) aus dem tragbaren elektronischen Gerät (10; 50) hinaus umfasst, **dadurch gekennzeichnet, dass** in einer ersten Position der Schallweg zu einer Lautsprecheröffnung (15A) verläuft, die näher an dem akustischen Wandler (21) liegt als eine zweite Öffnung (15B), während in einer zweiten Position der Schallweg verlängert wird, wenn sich die relative Position des ersten Teils (12) und des zweiten Teils (13) ändert.

2. Tragbares elektronisches Gerät (10; 50) nach Anspruch 1, wobei wenigstens ein Teil der Mittel (22) in das Gehäuse integriert ist.

3. Tragbares elektronisches Gerät (10; 50) nach Anspruch 1 oder 2, wobei wenigstens ein Teil der Mittel (22) in den ersten Teil (12) oder den zweiten Teil (13) integriert ist.

4. Tragbares elektronisches Gerät (10; 50) nach Anspruch 1, 2 oder 3, wobei das Mittel (22) wenigstens teilweise in einem Mittel zum Zusammenfügen des ersten Teils (12) und des zweiten Teils (13) enthalten ist, insbesondere in einem Scharnier zwischen dem ersten Teil (12) und dem zweiten Teil (13) oder in Anlage daran.

5. Tragbares elektronisches Gerät (10; 50) nach einem der vorherigen Ansprüche, **dadurch gekennzeichnet, dass** das Mittel (22) einen Durchgang umfasst, der entweder hohl oder wenigstens teilweise mit einem Material mit besseren akustischen Kopplungseigenschaften gefüllt ist als das den Durchgang umgebende Material.

6. Tragbares elektronisches Gerät (10; 50) nach einem der vorherigen Ansprüche, **dadurch gekennzeichnet, dass** das Mittel (22) so gestaltet ist, dass es den Schallkanal von dem akustischen Wandler weg verlängert.

7. Tragbares elektronisches Gerät (10; 50) nach einem der vorherigen Ansprüche, **dadurch gekennzeichnet, dass** das Mittel (22) so gestaltet ist, dass es den Schallkanal in der zweiten Position zu einer anderen Fläche des tragbaren elektronischen Geräts verlängert als in der ersten Position.

8. Tragbares elektronisches Gerät (10; 50) nach einem der vorherigen Ansprüche, das ferner Mittel (203) zum Verstärken eines Audiosignals (S1) und Mittel (201) zum Justieren der Verstärkung des genannten Audiosignals (S1) umfasst, wobei das Mittel (201) zum Justieren der Verstärkung auf die Position des ersten Teils (13) relativ zum zweiten Teil (12) anspricht.

9. Tragbares elektronisches Gerät (10; 50) nach Anspruch 8, wobei das Mittel (201) zum Justieren der Verstärkung so gestaltet ist, dass es die Verstärkung in der zweiten Position nicht so stark erhöhen kann wie in der ersten Position.

10. Tragbares elektronisches Gerät (10; 50) nach Anspruch 8, wobei das Mittel (201) zum Justieren der Verstärkung so gestaltet ist, dass es die Verstärkung in der ersten Position stärker erhöht als in der zweiten Position.

11. Tragbares elektronisches Gerät (10; 50) nach einem der vorherigen Ansprüche, wobei der erste Teil (12) und der zweite Teil (13) so gestaltet sind, dass sie in der ersten Position ein Display (11) oder eine Tastatur (16) wenigstens teilweise bedecken und sie in der zweiten Position in einem geringeren Ausmaß oder gar nicht bedecken.

12. Tragbares elektronisches Gerät (10; 50) nach einem der vorherigen Ansprüche, wobei der erste Teil (12) ein Körperteil und der zweite Teil (13) eine Muschelschale ist.

13. Tragbares elektronisches Gerät (10; 50) nach einem der vorherigen Ansprüche, wobei der erste Teil (12) ein Körperteil und der zweite Teil (13) ein Schieber ist.

14. Tragbares elektronisches Gerät (10; 50) nach einem der vorherigen Ansprüche, wobei der erste Teil (12) ein Körperteil und der zweite Teil (13) ein Kappenteil ist.

15. Tragbares elektronisches Gerät (50) nach einem der vorherigen Ansprüche, wobei das tragbare elektronische Gerät (50) ferner Mittel zum wiederholten Wechseln zwischen der ersten Position und der zweiten Position umfasst, wenn der erste Teil (12) und der zweite Teil (13) mit Bezug aufeinander verschoben oder aufeinander gedrückt werden.

16. Tragbares elektronisches Gerät (10; 50) nach einem der vorherigen Ansprüche, wobei das tragbare elektronische Gerät (10; 50) ein Telefon ist oder Mittel (201) für Telefonie aufweist.

17. Tragbares elektronisches Gerät (10; 50) nach einem der vorherigen Ansprüche, wobei der akustische Wandler (21) ein Lautsprecher ist.

## Revendications

1. Un dispositif électronique portatif (10; 50), comprenant : un transducteur acoustique (21) adapté de façon à convertir un signal audio (S2) en un signal acoustique et un boîtier comprenant en outre une première partie (12) et une deuxième partie (13), le dispositif électronique portatif (10; 50) comprend en outre un moyen (22) adapté de façon à étendre un trajet sonore ou une partie de celui-ci du transducteur acoustique (21) à l'extérieur du dispositif électronique portatif (10; 50), **caractérisé en ce que** : dans une première position, le trajet sonore s'étend jusqu'à une ouverture pour haut-parleur (15A) plus proche du transducteur acoustique (21) qu'une deuxième ouverture (15B) pendant qu'il se trouve dans une deuxième position dans laquelle le trajet sonore est étendu lorsque la position relative de la première partie (12) et de la deuxième partie (13) est modifiée.

2. Un dispositif électronique portatif (10; 50) selon la Revendication 1, où : au moins une partie du moyen (22) est intégrée dans le boîtier.

3. Un dispositif électronique portatif (10; 50) selon la Revendication 1 ou 2, où : au moins une partie du moyen (22) est intégrée dans la première partie (12) ou dans la deuxième partie (13).

4. Un dispositif électronique portatif (10; 50) selon la Revendication 1, 2, ou 3, où : le moyen (22) est au moins partiellement compris dans le moyen d'assemblage de la première partie (12) à la deuxième partie (13), en particulier dans une articulation entre la première partie (12) et la deuxième partie (13) ou en appui contre celle-ci.

5. Un dispositif électronique portatif (10; 50) selon l'une quelconque des Revendications précédentes, **caractérisé en ce que** : le moyen (22) comprend un passage qui est soit creux ou au moins partiellement rempli avec un matériau possédant des propriétés de couplage acoustique meilleures que celles du matériau entourant le passage.

6. Un dispositif électronique portatif (10; 50) selon l'une quelconque des Revendications précédentes, **caractérisé en ce que** : le moyen (22) est adapté de façon à éloigner le canal sonore du transducteur acoustique.

7. Un dispositif électronique portatif (10; 50) selon l'une quelconque des Revendications précédentes, **caractérisé en ce que** : le moyen (22) est adapté de façon à étendre le canal sonore vers une autre face du dispositif électronique portatif dans la deuxième position que celle de la première position.

8. Un dispositif électronique portatif (10; 50) selon l'une quelconque des Revendications précédentes, comprenant en outre : un moyen (203) d'amplification d'un signal audio (S1), et un moyen (201) de réglage du gain avec lequel ledit signal audio (S1) est amplifié, le moyen (201) de réglage du gain étant réactif à la position relative de la première partie (13) à la deuxième partie (12).

9. Un dispositif électronique portatif (10; 50) selon la Revendication 8, où : le moyen (201) de réglage du gain dans la deuxième position est empêché d'augmenter le gain autant que dans la première position.

10. Un dispositif électronique portatif (10; 50) selon la Revendication 8, où : le moyen (201) de réglage du gain est adapté de façon à augmenter le gain dans la première position plus que dans la deuxième position.

11. Un dispositif électronique portatif (10; 50) selon l'une quelconque des Revendications précédentes où : la première partie (12) et la deuxième partie (13) sont dans la première position adaptées de façon à au moins partiellement couvrir un écran (11) ou un clavier (16), et dans la deuxième position à les couvrir dans une moindre mesure ou à ne pas les couvrir.

12. Un dispositif électronique portatif (10; 50) selon l'une quelconque des Revendications précédentes, où : la première partie (12) est une partie corps et la deuxième partie (13) est une double coque.

13. Un dispositif électronique portatif (10; 50) selon l'une quelconque des Revendications précédentes, où : la première partie (12) est une partie corps et la deuxième partie (13) est une partie coulissante.

14. Un dispositif électronique portatif (10; 50) selon l'une quelconque des Revendications précédentes, où : la première partie (12) est une partie corps et la deuxième partie (13) est une partie couvercle.

15. Un dispositif électronique portatif (50) selon l'une quelconque des Revendications précédentes, où : le dispositif électronique portatif (50) comprend en outre un moyen de basculer de manière répétitive entre la première position et la deuxième position lorsque la première partie (12) et la deuxième partie (13) coulissent l'une par rapport à l'autre ou sont pressées l'une sur l'autre.

16. Un dispositif électronique portatif (10; 50) selon l'une quelconque des Revendications précédentes, où : le dispositif électronique portatif (10; 50) est un téléphone ou possède un moyen (201) de téléphonie.

17. Un dispositif électronique portatif (10; 50) selon l'une quelconque des Revendications précédentes, où : le transducteur acoustique (21) est un haut-parleur.
